# FASCICULE DE BREVET EUROPEEN

(11) **EP 2 521 073 B1**
(45) Date de publication et mention de la délivrance du brevet: **06.08.2014**
(21) Numéro de dépôt: 12165610.2
(22) Date de dépôt: 26.04.2012
(51) Int. Cl.: G06K 19/077

(54) **Procédé de préparation d'un support de carte à base de cellulose pour minicarte**
Vorbereitungsverfahen eines Kartenhalters auf Zellulosebasis für Minikarte
Method for preparing a cellulose card mounting for a minicard

(30) Priorité: 02.05.2011 FR 1153736
(43) Date de publication de la demande: 07.11.2012
(73) Titulaire: Oberthur Technologies, 92700 Colombes (FR)
(72) Inventeur: Bosquet, Olivier, 35500 VITRE (FR); Huet, Mickaël, 35370 BREAL SOUS VITRE (FR)
(74) Mandataire: Quantin, Bruno Marie Henri

(56) Documents cités:
- WO-A1-2009/003942
- DE-A1- 19 921 525
- US-A1- 2007 125 866
- US-A1- 2008 083 831

## Description

L'invention concerne une carte à puce dont le corps de carte présente une grande facilité de recyclage.

L'utilisation de matières autres que le PVC (voire le PVC-ABS) est un enjeu majeur pour le monde de la carte à puce, notamment pour éviter le dégagement d'acide chlorhydrique lors du recyclage des corps de carte.

Dans le présent contexte, une carte à puce (on parle aussi de carte à microcircuit) est une entité électronique comportant un microcircuit rendu solidaire d'un support dont la forme et les dimensions sont en pratique définies par des normes, de manière à permettre leur implantation dans des appareils destinés à recevoir de telles entités. De telles cartes à puce ont principalement eu, dans le passé, un format dit « carte de crédit » ou ID-1 (on utilise parfois la désignation de 1 FF pour « premier facteur de forme »), mais des formats plus petits ont eu tendance à se généraliser, notamment pour des applications téléphoniques (minicartes GSM de format ID-000, parfois désigné par 2FF ), voire plus récemment des minicartes encore plus petites (par exemple les minicartes parfois appelées microcarte, ou mini-UICC, dont le format est aussi désigné par 3FF). En pratique les petites cartes sont fabriquées, y compris du point de vue de l'implantation de fonctions, au sein d'un support plus grand, par exemple au sein de supports ayant le format ID-1, en étant entourées de prédécoupes tout en étant attachées au support par des attaches destinées à être ultérieurement rompues, le plus souvent au moment de la mise en service.

On comprend aisément que la rupture de telles attaches doit laisser des portions résiduelles aussi petites que possible, ce qui signifie que cette rupture doit être aussi nette que possible. En outre, d'éventuelles portions résiduelles doivent rester dans l'encombrement du corps de la carte, ce qui a conduit à prévoir que les zones de rupture des attaches soient localisées dans des zones en retrait par rapport au contour d'un tel corps de carte ; cela est notamment décrit dans le document EP - 1 405 260, qui préconise une configuration dans laquelle la minicarte est reliée au corps environnant par une attache en V (plus précisément en forme de coupe avec un rétrécissement bien marqué au niveau de la base de cette attache, à l'intérieur du contour de la minicarte) et une zone frangible allongée située le long d'un petit côté éloigné de cette attache. En fait, il y a plusieurs manières de provoquer la rupture des attaches reliant une minicarte au corps environnant, avec la configuration précitée:
- on peut agir sur le dessus, avec un doigt qui appuie sur la face supérieure de la carte (celle où débouche en pratique le microcircuit), en sorte de rompre d'abord l'attache en V, puis la zone frangible allongée,
- on peut agir sur le dessous, avec un doigt qui appuie sur la face inférieure de la carte (celle opposée à celle où débouche le microcircuit), en sorte de rompre, de même, d'abord l'attache en V puis la zone frangible allongée,
- avec un doigt qui appuie d'abord sur la minicarte auprès de l'attache en V, puis sur cette minicarte auprès de la zone allongée.

Dans le cas de corps de carte en matière plastique, telle que du PVC, les zones de rupture sont localisées par avance par des rainures ménagées dans les attaches (voir le document EP - 1 050 018) ou par une réduction très localisée de la largeur de ces attaches (voir le document EP - 1 405 260 précité).

La demande de brevet US2008/0083831 A1 décrit un support de carte comprenant une carte SIM détachable. Les attaches de liaisons entre la carte SIM et le support forment une zone cassable ayant une épaisseur égale ou inférieure à l'épaisseur de la région adjacente.

On comprend que le choix d'un matériau autre qu'une telle matière plastique doit prendre en compte l'impératif ci-dessus.

Il a déjà été proposé de réaliser des corps de carte à puce par superposition de couches de papier. Ainsi le document US - 5 888 624 a proposé un corps de carte formé en une ou plusieurs couches de papier ou de carton, dans lequel une cavité, éventuellement bordée par un gradin, est formée par découpe ou fraisage pour recevoir un module comportant un microcircuit. Une autre technique est proposée dans le document US - 7 069 652, ou les éléments constitutifs d'un module sont répartis dans des zones prédécoupées d'au moins deux feuilles qui sont ensuite laminées ensemble.

Le document DE - 199 21 525 mentionne également l'usage de papier ou de carton pour réaliser des cartes à puce. Plus précisément, ce document décrit diverses configurations de minicartes intégrées à un corps de format plus grand, mettant en oeuvre des dégagements destinés à recevoir un doigt au moment du détachement des minicartes vis-à-vis du corps ; la minicarte peut avoir la même épaisseur que le corps associé, ou avoir une épaisseur plus faible auquel cas la minicarte peut être collé de manière réversible au fond d'une cavité. Dans ce dernier cas il est proposé que le corps soit formé de deux couches dont l'une comporte la minicarte en cause; la cavité recevant la minicarte peut être formée par découpe (dans l'une des couches) et poinçonnage (dans l'autre couche).

Un problème que l'on rencontre avec des corps de carte à base de papier ou de carton, c'est-à-dire à base de fibres de cellulose, est que la rupture des attaches reliant une minicarte au corps qui l'entoure peut se traduire par des arrachements de ces fibres en des zones extérieures à ces attaches, même dans le cas d'attaches ayant la géométrie préconisée dans le document EP - 1 405 260 précité, avec le risque que des portions du corps restent attachés à la minicarte. Il faut alors prévoir un ébavurage pour conférer à la minicarte un aspect visuel acceptable pour les clients.

Il faut noter que la norme ISO 7816 impose que d'éventuelles bavures ne débordent de pas de plus de 100 microns en dehors du contour théorique de la minicarte.

Par analogie avec ce qui a été fait dans le cas de corps de carte à base de matière plastique (à la fois pour le corps de la minicarte et pour le corsp environnant), on peut penser à prévoir des entailles dans les attaches, de préférence des deux côtés du corps de la minicarte, pour confiner aussi précisément que possible la future rupture des attaches ; le problème est toutefois que cela impose d'arriver à régler finement le mouvement des lames de coupe pour que celles-ci pénètre suffisamment, mais pas trop, dans l'épaisseur de la carte de grand format le long du contour de la minicarte (il peut falloir conserver une épaisseur non coupée d'à peine 150 microns), d'autant que le souci d'une productivité satisfaisante impose que de telles prédécoupes aient lieu simultanément sur toutes les zones destinées à être rompues.

L'invention a pour objet un procédé de préparation d'un support de carte à base de fibres de cellulose, notamment en papier, dans lequel est prédécoupée une minicarte à microcircuit reliée à un corps environnant par des attaches destinées à être rompues, qui nécessite très peu de réglages en ce qui concerne la configuration des attaches, tout en minimisant les bavures au moment de la rupture de ces zones. L'invention a également pour objet une carte de grand format contenant une minicarte destinée à être détachée sans bavure

L'invention propose à cet effet un procédé de préparation d'un support de carte contenant une minicarte à microcircuit et un corps environnant auquel la minicarte est reliée par des attaches destinées à être rompues lors d'un détachement de la minicarte vis-à-vis de ce corps environnant, selon lequel on délimite le contour de la minicarte au sein du support par découpe de fentes longeant ce contour tout en ménageant des attaches reliant cette minicarte au corps environnant, **caractérisé en ce qu'**on prépare le support de carte en un matériau à base de cellulose, et que l'on effectue un écrasement sans découpe de ces attaches dans les zones où il est souhaité que celles-ci se rompent au moment du futur détachement.

Le matériau considéré étant en pratique du papier, on comprend que sa porosité est telle qu'il est sensible à tout impact ; on peut donc facilement le marquer par écrasement ; lorsque le papier est marqué, il est facilement pliable voire déchirable (sans déchirure interne des couches de fibres de ceiiuiose); cela permet de bien contrôler la future rupture.

Puisque les fibres de cellulose sont marquées sans être découpées, le risque que la minicarte se détache de manière intempestive est minimisé tout en favorisant nettement que la rupture ait lieu en ces zones d'écrasement.

On peut noter que les efforts à appliquer pour marquer ainsi du papier sont de faible niveau, et ne nécessitent donc pas d'équipement particulièrement puissant.

De manière préférée, on donne aux attaches une forme compacte, c'est-à-dire localisées de manière quasi-ponctuelle. On comprend en effet que le déchirement des attaches sera d'autant plus facile, et donc contrôlable, que les zones de déchirement de celles-ci sont courtes, parallèlement aux fentes.

De manière préférée, les attaches ont une conformation en V, avec une partie de largeur minimale située à l'intérieur du contour de la minicarte. Cela contribue aussi à confiner les endroits des futures ruptures tout en favorisant le respect des contraintes des normes en matière d'éventuelles bavures.

Les attaches sont avantageusement de faible nombre, par exemple au nombre de trois (en pratique elles sont au moins au nombre de trois pour maintenir la minicarte dans le plan du support de carte) ; toutefois, de manière préférée, elles sont au nombre de quatre, ce qui est apparu donner un bon compromis minimisant le risque de détachement intempestif de la minicarte lors des opérations de personnalisation et d'ensachage tout en facilitant le détachement, lorsque cela est souhaité. Ainsi, lorsque la minicarte a une forme rectangulaire (ce qui est un cas de grande importance pratique), elle est avantageusement reliée au corps environnant par deux paires d'attaches réparties sur deux côtés opposés de la minicarte, par exemple les deux côtés les plus courts (ce qui favorise le détachement).

Pour des raisons de productivité, il est avantageux qu'on effectue simultanément l'écrasement desdites zones d'attaches. Grâce au principe d'écrasement sans découpe, ces écrasements simultanés peuvent être réalisés sans impliquer de réglages complexes.

De manière préférée, on écrase lesdites zones des attaches à un taux d'écrasement compris entre 40% et 60%, ce qui est un bon compromis entre le maintien de la minicarte dans son corps environnant et la facilité de détachement, le moment voulu.

De manière préférée, on effectue l'écrasement desdites zones des attaches au moyen d'au moins une lame dont la tranche s'étend parallèlement au support de carte, et dont le profil comporte deux flancs inclinés séparés par au moins une arête d'angle compris entre 100° et 140°. Cet angle d'arête est de préférence égal à environ 120° (+/-5°). De tels angles obtus se sont révélés permettre de manière fiable un écrasement sans découpe.

De manière préférée, les flancs inclinés sont symétriques l'un de l'autre par rapport à un plan moyen de la lame, ce qui favorise l'obtention d'un écrasement important sans toutefois risquer une découpe intempestive.

Selon une première configuration avantageuse de la lame, les flancs inclinés sont séparés par une unique arête ; c'est en regard de celle-ci que s'obtient l'écrasement maximal.

Selon une seconde configuration avantageuse de la lame, la tranche de la lame comporte un plateau séparant les flancs inclinés et auquel il est relié par deux arêtes. Cela favorise l'obtention d'un écrasement important sans risquer de découpe intempestive. De manière préférée, la largeur du plateau est inférieure à un tiers de l'épaisseur du support de carte.

Il est apparu plus important de contrôler l'angle d'arête plutôt que l'angle entre les flancs inclinés, la valeur de 120° pour l'angle d'arête étant apparue comme bien appropriée dans chacune des configurations, qu'il y ait une seule, ou deux, arête(s).

L'écrasement peut être effectué au moyen d'une seule lame agissant à l'encontre d'un presse-flan plan. Toutefois, de manière avantageuse, on effectue l'écrasement entre deux lames dont les tranches sont disposées face à face de part et d'autre du support de carte. Cela permet de répartir l'écrasement de part et d'autre de la partie médiane de l'épaisseur du support de carte. De même, pour assurer une bonne répartition de l'écrasement de part et d'autre de cette partie médiane, les tranches des lames ont avantageusement des configurations symétriques par rapport au support de carte.

Comme indiqué précédemment, l'invention vise notamment le cas de cartes normalisées selon la norme ISO 7816, avec un support de format ID-1 et une épaisseur de 760 microns. Dans un tel cas de grande importance pratique, les lames ont avantageusement des courses de 170 à 230 microns dans l'épaisseur de ce support (ce qui correspond aux taux de 40% à 60% précités).

L'invention propose en outre un support de carte obtenu par le procédé précité, à savoir un support de carte contenant une minicarte à microcircuit et un corps environnant auquel la minicarte est reliée par des attaches destinées à être rompues lors d'un détachement de la minicarte vis-à-vis de ce corps environnant, le contour de la minicarte étant délimité au sein du support par des fentes longeant ce contour en étant séparées par des attaches reliant cette minicarte au corps environnant, **caractérisé en ce que** le support de carte est en un matériau à base de cellulose, et les attaches présentent des zones d'écrasement sans découpe aux endroits où il est souhaité que celles-ci se rompent au moment du futur détachement.

Comme précédemment, la forme des attaches est avantageusement compacte.

De manière préférée, les zones d'écrasement ont un taux d'écrasement compris entre 40% et 60%.

Des objets, caractéristiques et avantages de l'invention ressortent de la description qui suit, donnée à titre d'exemple illustratif non limitatif, donnée en regard des dessins annexés sur lesquels :
- la figure 1 est une vue de dessus d'un support de carte conforme à l'invention,
- la figure 2 est une vue agrandie du détail A de la figure 1,
- la figure 3 est une vue en coupe selon la ligne B-B de la figure 2,
- la figure 4 est une vue en élévation d'une lame d'écrasement adaptée à la mise en oeuvre du procédé de l'invention,
- la figure 5 est une vue en élévation d'une autre lame d'écrasement adaptée à la mise en oeuvre du procédé de l'invention,
- la figure 6 est un schéma de mise en oeuvre du procédé de l'invention avec une seule lame d'écrasement, et
- la figure 7 est un autre schéma de mise en oeuvre du procédé de l'invention avec deux lames d'écrasement.

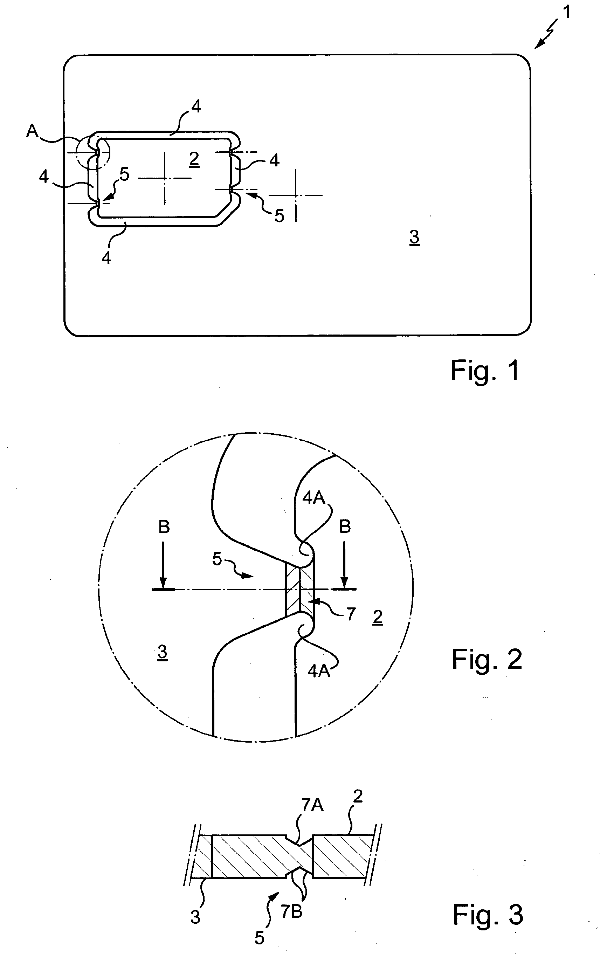

La figure 1 représente un support de carte, désigné par 1 dans son ensemble. Ce support contient une minicarte à microcircuit 2 et un corps environnant 3 dont la minicarte est adaptée à être détachée, en temps utile.

Le contour de cette minicarte est déterminé par des fentes étroites traversantes 4, séparées par des attaches 5 reliant la minicarte au corps environnant 3.

Le microcircuit (non représenté) est connu en soi, et occupe une zone prédéterminée dans la minicarte ; cette dernière peut être une minicarte d'un format normalisé, tel que celui des minicartes SIM pour la téléphonie mobile (ces cartes sont parfois désignées sous l'appellation de minicartes GSM ou cartes de format 2FF), voire des cartes encore plus petites (mini-UICC) dont le format est désigné sous l'appellation 3FF.

De manière générale, mais cela n'est pas impératif, les cartes les plus répandues ont une forme globalement rectangulaire (avec des coins arrondis) avec, dans le cas des cartes les plus petites, un coin coupé destiné à servir de détrompeur lors de sa mise en place en service.

Pour mémoire, les cartes à microcircuit ont classiquement une épaisseur de 760 microns et :
- pour les cartes ID-1 ou 1 FF, une longueur de 85.6 mm et une largeur de 54 mm,
- pour les cartes ID-000 ou 2FF, une longueur de 25 mm et une largeur de 15mm,
- pour les cartes mini-UICC, ou microcartes ou 3FF, une longueur de 15 mm et une largeur de 12 mm.

Il est à noter que le microcircuit a généralement les mêmes dimensions quelles que soient les dimensions de la carte considérée, ce qui explique qu'il soit classique de fabriquer une carte de petit format au sein d'un support de plus grand format, en utilisant les techniques de fabrication bien maîtrisées pour ce plus grand format.

Selon un aspect de l'invention, le support de carte 1 est, en dehors du microcircuit, en un matériau à base de cellulose (plus précisément à base de fibres de cellulose), typiquement du papier, voire du carton.

Les attaches reliant la minicarte 2 au corps environnant sont destinées à être rompues au moment d'assurer le détachement de cette minicarte vis-à-vis de ce corps 3.

Contrairement aux attaches habituelles dans le cas où le matériau du support de carte est une matière plastique telle que du PVC, les attaches 5 sont ici avantageusement compactes (on peut aussi dire qu'elles sont ponctuelles, c'est à dire localisées de manière quasi-ponctuelle) ; dans un tel cas, il n'y a pas d'attaches longeant le contour de la minicarte sur une proportion importante de la longueur d'un côté. En d'autres termes, les attaches ont avantageusement une largeur (là où elles sont destinées à être déchirées) qui est du même ordre que leur longueur (qui correspond à la largeur des fentes qu'elles séparent).

Ces attaches, sont dans l'exemple ici représenté au nombre de quatre, en deux paires disposées sur les petits côtés, ici de manière symétrique par rapport à un axe transversal de la minicarte (non représenté). Bien entendu, le nombre de ces attaches pourrait être plus faible (par exemple trois) ou supérieur. Elles pourraient aussi être situées sur les grands côtés de la minicarte.

Selon un autre aspect de l'invention chaque attache comporte des zones d'écrasement sans découpe aux endroits où il est souhaité que celles-ci se rompent au moment du futur détachement.

Cela ressort des figures 2 et 3 qui représentent plus en détail l'attache supérieure gauche du support de carte de la figure 1.

En pratique le déchirement est souhaité à la jonction de l'attache à la minicarte, de sorte que la zone d'écrasement est localisée en cet endroit.

De manière connue, pour minimiser le risque qu'il subsiste après rupture une bavure susceptible de déborder du contour de la minicarte, l'attache 5 est de préférence, à sa jonction avec la minicarte (à droite sur la figure 2), bordée par des portions de fentes 4A incurvées vers l'intérieur de la minicarte ; en outre, cette attache présente avantageusement un minimum de largeur à l'intérieur de ce contour, ayant globalement une forme en V dont la pointe est dirigée vers l'intérieur de la minicarte ; cette forme en V peut être bordée par des contours sensiblement rectilignes (voir la figure 2), mais peut aussi être arrondie en sorte de conférer à l'attache une forme de coupe à pied. Toutefois on peut, en variante, se contenter d'attaches de forme rectangulaire, si le risque de bavure n'est pas considéré comme vraiment gênant, ou si le matériau choisi est tel que le déchirement lors du détachement se laisse confiner dans la zone d'écrasement.

La zone d'écrasement est désignée sous la référence 7. Elle est ici située en majorité à l'intérieur du contour de la minicarte, en travers de la zone de jonction de l'attache à cette minicarte. Plus précisément (voir conjointement les figures 2 et 3), cette zone d'écrasement présente un sillon d'écrasement maximum 7A situé à l'intérieur du contour, en étant bordé par des flancs inclinés 7B de raccordement aux portions de l'attache et de la minicarte qui ne sont pas écrasées.

Il est important de noter que, en cette zone 7, le matériau constitutif de la minicarte (en dehors du microcircuit), de l'attache et du corps environnant 3, est écrasé et non pas découpé ; il n'y a pas d'enlèvement de matière, ni de section des fibres constituant la cellulose. L'absence de découpe permet d'éviter des réglages fastidieux dans le fonctionnement des outils d'écrasement ; on peut noter que le fait qu'il n'y ait pas de découpe a aussi pour avantage de ne pas détériorer l'apparence visuelle du support de carte au niveau des attaches.

Le taux d'écrasement est de préférence compris entre 40% et 60%, ce qui correspond à bon compromis entre une bonne fragilité de la zone d'attache ainsi écrasée, et l'assurance d'un maintien de la liaison entre la minicarte et le corps environnant au cours de l'opération d'écrasement et tant que le détachement n'est pas provoqué volontairement. Un taux d'écrasement légèrement inférieur à 50% (par exemple 45%) est apparu particulièrement approprié.

Pour assurer l'écrasement sans découpe de la zone d'attache où l'on souhaite voir se produire le déchirement lors du détachement on utilise une lame d'écrasement dont la tranche, destinée à s'étendre parallèlement au support de carte, ne présente pas d'arête ayant un angle aigu. De manière avantageuse, cette tranche ne présente pas d'angle d'arête inférieur à 100° (comme cela apparaîtra plus loin, il peut y avoir une ou deux arêtes). En outre, il est apparu, pour assurer une bonne localisation de la zone d'écrasement, en sorte d'obtenir un sillon étroit, que cet angle d'arête ne soit pas supérieur à 140°. Une valeur de 120° est apparue tout à fait appropriée.

En variante non représentée, la tranche de la lame est arrondie (en termes imagés, la lame est émoussée).

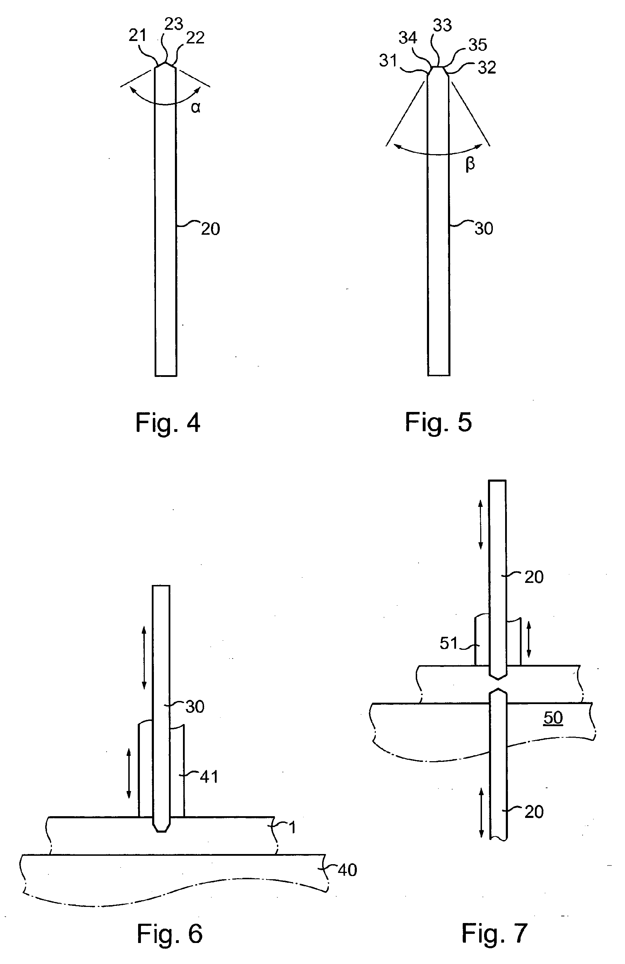

Deux configurations sont représentées aux figures 4 et 5.

La figure 4 représente une lame 20 dont la tranche présente deux flancs inclinés 21 et 22 séparés par une arête 23 ; cette lame comporte donc une seule arête. Cette configuration favorise la formation d'un sillon d'écrasement bien étroit, propre à bien guider le déchirement au moment du détachement de la minicarte.

Dans l'exemple représenté, les deux flancs 21 et 22 sont symétriques par rapport à un plan médian de la lame (non représenté). En variante, notamment si l'on veut situer le sillon d'écrasement au plus près de la minicarte, on peut prévoir que le flanc destiné à former le raccordement du sillon à la minicarte soit plus raide que l'autre.

L'angle d'arête formé par les flancs inclinés est noté a. Comme indiqué ci-dessus, cet angle est avantageusement de l'ordre de 120°

La figure 5 représente une lame 30 comportant deux flancs inclinés 31 et 32, séparés par un plateau 33 ; il y a donc deux arêtes 34 et 35.

La largeur de ce plateau est en pratique comprise entre ¼ et ¾ due l'épaisseur de la lame ; elle est en outre avantageusement choisie pour être inférieure à un tiers de l'épaisseur du support de carte dans lequel un sillon d'écrasement doit être formé (à titre d'exemple, pour une épaisseur de support de carte de 760 microns, le plateau aura avantageusement une largeur d'au plus 200 microns).

Si l'angle entre les flancs inclinés est noté β, il est apparu approprié de choisir une valeur de β sensiblement inférieure à l'angle α de la lame 20 ; ainsi une valeur de 60° (soit la moitié de α) est apparue tout à fait appropriée. On peut noter que, avec une telle valeur, l'angle entre chaque flanc 31 ou 32 et le plateau est de l'ordre de 120°, ce qui justifie le fait que l'on ait indiqué ci-dessus une condition sur l'angle d'arête indépendamment du nombre d'arête.

L'écrasement de la zone 7 est obtenu par un mouvement transversal de la lame par rapport au plan du support de carte, en travers de l'attache.

La figure 6 représente une configuration où cet écrasement est obtenu au moyen d'une seule lame (ici la lame 30 de la figure 5).

Le support de carte 1 (où une feuille dans laquelle on délimitera ultérieurement le support de carte) est positionné sur un plateau support 40 : il est par exemple adapté à circuler le long de ce plateau grâce à une ou plusieurs courroie(s). Ce peut être notamment le cas lorsque le support de carte n'est pas encore détaché vis-à-vis d'un support plus grand, par exemple une bande. En variante, les supports de carte peuvent être amenés par le dessus.

De manière avantageuse, pour éviter une déformation de la feuille lors de l'écrasement un bloc 50 appelé presse-flan est adapté à s'abaisser pour maintenir le support de carte 1 lors de l'écrasement : la lame y est normalement escamotée en configuration de repos, ce qui évite tout risque de rayure des supports de carte par cette lame ; ce n'est qu'au moment de l'opération d'écrasement qu'on fait descendre la lame. On comprend que le contrôle de la distance dont la lame vient en saillie par rapport à la surface inférieure du bloc détermine le taux d'écrasement qui sera obtenu (le taux d'écrasement peut être légèrement inférieur au rapport de cette distance en saillie à l'épaisseur du support 1, compte tenu d'une légère élasticité du papier).

La figure 7 représente une autre configuration où l'écrasement est assuré entre deux lames dont les tranches sont disposées face à face de part et d'autre du support de carte ; dans l'exemple ici considéré, les lames sont symétriques l'une de l'autre, similaires chacune à la lame 20 de la figure 4. En variante on peut utiliser une lame 20 et une lame 30.

On comprend que le fait d'assurer l'écrasement à partir de chacune des faces du support permet de minimiser le risque, pour un taux d'écrasement donné, qu'il y ait une découpe intempestive.

Comme précédemment, la lame supérieure 20 est associée à un bloc de maintien 51 (presse-flan) qui contient normalement cette lame et qui s'abaisse au moment de l'écrasement. Quant à la lame inférieure, elle coulisse en sorte de venir en saillie vis-à-vis de la surface supérieure du plateau support 50 (ou d'un presse-flan ménagé au sein de celui-ci). On comprend que le taux d'écrasement est déterminé par la somme des distances sur lesquelles les lames viennent en saillie.

Pour un support de carte en papier d'épaisseur égale à 760 microns, la distance de pénétration de la lame, ou des lames lorsqu'il y en a deux, est avantageusement comprise entre 170 microns et 230 microns, ce qui correspond au taux d'écrasement de 40% à 60% mentionné ci-dessus.

En pratique les attaches compactes ici considérées ont une largeur de 1 à 5 mm et la lame (ou les lames) a(ont) une épaisseur de 0.3 mm à 1 mm.

Les lames sont avantageusement en acier. On comprend que, puisque ces lames sont destinées à écraser sans découper, elles subissent une faible usure.

Le support en papier peut avoir été formé en une seule feuille ; il peut en variante être formé de deux feuilles, avantageusement d'épaisseurs identiques, par exemple 360 microns, collées l'une à l'autre par une couche de colle, dont l'épaisseur est par exemple de 40 microns (d'où un total de 760 microns).

De manière avantageuse, l'ensemble des attaches fait l'objet d'un écrasement en une seule opération.

On comprend que l'invention est tout particulièrement adaptée à des supports dans lesquels sont prédécoupés des minicartes de type 3FF, dont les dimensions excèdent peu celles du microcircuit (ou plus précisément du module dont ce microcircuit fait partie, de manière bien connue).

## Revendications

1. Procédé de préparation d'un support de carte contenant une minicarte à microcircuit (2) et un corps environnant (3) auquel la minicarte est reliée par des attaches (5) destinées à être rompues lors d'un détachement de la minicarte vis-à-vis de ce corps environnant, selon lequel on délimite le contour de la minicarte au sein du support par découpe de fentes (4) longeant ce contour tout en ménageant des attaches reliant cette minicarte au corps environnant,
**caractérisé en ce qu'**on prépare le support de carte en un matériau (1) à base de cellulose, et que l'on effectue un écrasement sans découpe (7) de ces attaches dans les zones où il est souhaité que celles-ci se rompent au moment du futur détachement.

2. Procédé selon la revendication 1, **caractérisé en ce que** l'on donne aux attaches (5) une forme compacte.

3. Procédé selon la revendication 1 ou la revendication 2, **caractérisé en ce que** les attaches (5) ont une conformation en V, avec une partie de largeur minimale située à l'intérieur du contour de la minicarte.

4. Procédé selon l'une quelconque des revendications 1 à 3, **caractérisé en ce que**, la minicarte ayant une forme globalement rectangulaire, on situe les attaches (5) en deux paires réparties sur deux côtés opposés de celle-ci.

5. Procédé selon l'une quelconque des revendications 1 à 4, **caractérisé en ce qu'**on effectue simultanément l'écrasement desdites zones d'attaches.

6. Procédé selon l'une quelconque des revendications 1 à 5, **caractérisé en ce qu'**on écrase lesdites zones des attaches à un taux d'écrasement compris entre 40% et 60%.

7. Procédé selon l'une quelconque des revendications 1 à 6, **caractérisé en ce que** l'on effectue l'écrasement desdites zones des attaches au moyen d'au moins une lame (20, 30) dont la tranche s'étend parallèlement au support de carte, et dont le profil comporte deux flancs inclinés (21, 22 ; 31, 32) séparés par au moins une arête (23 ; 34, 35) d'angle compris entre 100° et 140°.

8. Procédé selon la revendication 7, **caractérisé en ce que** l'angle d'arête est de 120°.

9. Procédé selon la revendication 7 ou la revendication 8, **caractérisé en ce que** les flancs inclinés sont symétriques l'un de l'autre par rapport à un plan moyen de la lame.

10. Procédé selon l'une quelconque des revendications 7 à 9, **caractérisé en ce que** les flancs inclinés sont séparés par une unique arête.

11. Procédé selon l'une quelconque des revendications 7 à 9, **caractérisé en ce que** la tranche de la lame comporte un plateau (33) séparant les flancs inclinés et auquel il est relié par deux arêtes.

12. Procédé selon la revendication 11, **caractérisé en ce que** la largeur du plateau est inférieure à un tiers de l'épaisseur du support de carte.

13. Procédé selon l'une quelconque des revendications 7 à 12, **caractérisé en ce que** l'on effectue l'écrasement entre deux lames dont les tranches sont disposées face à face de part et d'autre du support de carte.

14. Procédé selon la revendication 13, **caractérisé en ce que** les tranches des lames ont des configurations symétriques par rapport au support de carte.

15. Procédé selon l'une quelconque des revendications 7 à 14, **caractérisé en ce que** le support de carte a une épaisseur de 760 microns et les lames ont des courses de 170 à 230 microns dans l'épaisseur de ce support.

16. Support de carte (1) contenant une minicarte à microcircuit (2) et un corps environnant (3) auquel la minicarte est reliée par des attaches (5) destinées à être rompues lors d'un détachement de la minicarte vis-à-vis de ce corps environnant, le contour de la minicarte étant délimité au sein du support par des fentes (4) longeant ce contour en étant séparées par des attaches reliant cette minicarte au corps environnant,
**caractérisé en ce que** le support de carte est en un matériau à base de cellulose, la forme des attaches est compacte, et les attaches présentent des zones d'écrasement sans découpe (7) aux endroits où il est souhaité que celles-ci se rompent au moment du futur détachement.

17. Support de carte selon la revendication 16, **caractérisé en ce que** les zones d'écrasement ont un taux d'écrasement compris entre 40% et 60%.

## Patentansprüche

1. Verfahren zum Vorbereiten eines Kartenträgers, der eine Minikarte (2) mit Mikroschaltung und einen umgebenden Körper (3) umfasst, mit dem die Minikarte durch Befestigungen (5) verbunden ist, die dazu bestimmt sind, bei einem Herauslösen der Minikarte aus dem umgebenden Körper zerbrochen zu werden, wobei der Umriss der Minikarte innerhalb des Trägers durch Stanzen von Schlitzen (4) entlang dieses Umrisses unter Beibehaltung der Befestigungen, die diese Minikarte mit dem umgebenden Körper verbinden, begrenzt wird,
**dadurch gekennzeichnet, dass** der Kartenträger aus einem Material (1) auf Zellulosebasis bereitgestellt wird und dass ein Quetschen ohne Schneiden (7) dieser Befestigungen in den Zonen, wo gewünscht ist, dass sie zu einem künftigen Zeitpunkt des Herauslösens zerbrechen, ausgeführt wird.

2. Verfahren nach Anspruch 1, **dadurch gekennzeichnet, dass** den Befestigungen (5) eine kompakte Form verliehen wird.

3. Verfahren nach Anspruch 1 oder Anspruch 2, **dadurch gekennzeichnet, dass** die Befestigungen (5) V-förmig sind, wovon sich ein Teil mit minimaler Breite innerhalb des Umrisses der Minikarte befindet.

4. Verfahren nach einem der Ansprüche 1 bis 3, **dadurch gekennzeichnet, dass** dann, wenn die Minikarte eine im Allgemeinen rechtwinklige Form hat, die Befestigungen (5) in zwei Paaren, die auf zwei gegenüberliegende Seiten hiervon verteilt sind, angeordnet werden.

5. Verfahren nach einem der Ansprüche 1 bis 4, **dadurch gekennzeichnet, dass** das Quetschen der Befestigungszonen gleichzeitig ausgeführt wird.

6. Verfahren nach einem der Ansprüche 1 bis 5, **dadurch gekennzeichnet, dass** die Befestigungszonen mit einem Quetschungsgrad im Bereich von 40 % bis 60 % gequetscht werden.

7. Verfahren nach einem der Ansprüche 1 bis 6, **dadurch gekennzeichnet, dass** das Quetschen der Befestigungszonen mittels wenigstens eines Plättchens (20, 30) ausgeführt wird, dessen Rand sich parallel zum Kartenträger erstreckt und dessen Profil zwei geneigte Seitenflächen (21, 22; 31, 32) aufweist, die durch wenigstens eine Kante (23; 34, 35) mit einem Winkel im Bereich von 100° bis 140° getrennt sind.

8. Verfahren nach Anspruch 7, **dadurch gekennzeichnet, dass** der Kantenwinkel 120° beträgt.

9. Verfahren nach Anspruch 7 oder Anspruch 8, **dadurch gekennzeichnet, dass** die geneigten Seitenflächen in Bezug auf eine Mittelebene des Plättchens zueinander symmetrisch sind.

10. Verfahren nach einem der Ansprüche 7 bis 9, **dadurch gekennzeichnet, dass** die geneigten Seitenflächen durch eine einzige Kante getrennt sind.

11. Verfahren nach einem der Ansprüche 7 bis 9, **dadurch gekennzeichnet, dass** der Rand des Plättchens ein Plateau (33) aufweist, das die geneigten Seitenflächen trennt und mit dem sie durch zwei Kanten verbunden sind.

12. Verfahren nach Anspruch 11, **dadurch gekennzeichnet, dass** die Breite des Plateaus kleiner als ein Drittel der Dicke des Kartenträgers ist.

13. Verfahren nach einem der Ansprüche 7 bis 12, **dadurch gekennzeichnet, dass** das Quetschen zwischen zwei Plättchen, deren Ränder beiderseits des Kartenträgers einander zugewandt angeordnet sind, ausgeführt wird.

14. Verfahren nach Anspruch 13, **dadurch gekennzeichnet, dass** die Ränder der Plättchen Konfigurationen haben, die in Bezug auf den Kartenträger symmetrisch sind.

15. Verfahren nach einem der Ansprüche 7 bis 14, **dadurch gekennzeichnet, dass** der Kartenträger eine Dicke von 760 Mikrometern hat und die Plättchen Hübe von 170 bis 230 Mikrometern in Richtung der Dicke dieses Trägers haben.

16. Kartenträger (1), der eine Minikarte (2) mit Mikroschaltung und einen umgebenden Körper (3) umfasst, mit dem die Minikarte durch Befestigungen (5) verbunden ist, die dazu bestimmt sind, bei einem Herauslösen der Minikarte aus diesem umgebenden Körper zerbrochen zu werden, wobei der Umriss der Minikarte innerhalb des Trägers durch Schlitze (4) begrenzt ist, die entlang dieses Umrisses verlaufen und durch Befestigungen, die diese Minikarte mit dem umgebenden Körper verbinden, getrennt sind,
**dadurch gekennzeichnet, dass** der Kartenträger aus einem Material auf Zellulosebasis besteht, die Form der Befestigungen kompakt ist und die Befestigungen Zonen (7) einer Quetschung ohne Schneiden an den Stellen aufweisen, wo gewünscht ist, dass diese zu einem künftigen Zeitpunkt eines Herauslösens zerbrechen.

17. Kartenträger nach Anspruch 16, **dadurch gekennzeichnet, dass** die Quetschungszonen einen Quetschungsgrad im Bereich von 40 % bis 60 % haben.

## Claims

1. Method for preparing a card support containing a microcircuit minicard (2) and a surrounding body (3) to which the minicard is connected by attachments (5) intended to be broken during a detachment of the minicard with respect to this surrounding body, in which method the contour of the minicard is delimited within the support by cutting slots (4) extending alongside this contour while forming attachments connecting this minicard to the surrounding body,
**characterised in that** the card support is prepared from a cellulose-based material (1), and **in that** crushing (7) of these attachments without cutting is carried out in the zones where it is desired that they break at the moment of future detachment.

2. Method according to claim 1, **characterised in that** the attachments (5) are given a compact shape.

3. Method according to claim 1 or claim 2, **characterised in that** the attachments (5) have a V-shaped configuration, with a minimum width part situated inside the contour of the minicard.

4. Method according to any one of claims 1 to 3, **characterised in that**, with the minicard having an overall rectangular shape, the attachments (5) are situated in two pairs distributed on two opposite sides thereof.

5. Method according to any one of claims 1 to 4, **characterised in that** the crushing of the said attachment zones is carried out simultaneously.

6. Method according to any one of claims 1 to 5, **characterised in that** the said zones of the attachments are crushed with a degree of crushing of between 40% and 60%.

7. Method according to any one of claims 1 to 6, **characterised in that** the crushing of the said zones of the attachments is carried out by means of at least one blade (20, 30) of which the edge surface extends parallel to the card support, and of which the profile comprises two inclined flanks (21, 22; 31, 32) separated by at least one edge (23; 34, 35) having an angle of between 100° and 140°.

8. Method according to claim 7, **characterised in that** the edge angle is 120°.

9. Method according to claim 7 or claim 8, **characterised in that** the inclined flanks are symmetrical to one another with respect to a median plane of the blade.

10. Method according to any one of claims 7 to 9, **characterised in that** the inclined flanks are separated by a single edge.

11. Method according to any one of claims 7 to 9, **characterised in that** the edge surface of the blade has a flat (33) separating the inclined flanks and to which it is connected by two edges.

12. Method according to claim 11, **characterised in that** the width of the flat is less than a third of the thickness of the card support.

13. Method according to any one of claims 7 to 12, **characterised in that** the crushing is carried out between two blades of which the edge surfaces are arranged facing one another on either side of the card support.

14. Method according to claim 13, **characterised in that** the edge surfaces of the blades have configurations which are symmetrical with respect to the card support.

15. Method according to any one of claims 7 to 14, **characterised in that** the card support has a thickness of 760 microns and the blades have travels of 170 to 230 microns within the thickness of this support.

16. Card support (1) containing a microcircuit minicard (2) and a surrounding body (3) to which the minicard is connected by attachments (5) intended to be broken during a detachment of the minicard with respect to this surrounding body, the contour of the minicard being delimited within the support by slots (4) extending alongside this contour while being separated by attachments connecting this minicard to the surrounding body,
**characterised in that** the card support is made of a cellulose-based material, the shape of the attachments is compact, and the attachments have zones (7) of crushing without cutting at the locations where it is desired that they break at the moment of future detachment.

17. Card support according to claim 16, **characterised in that** the crushing zones have a degree of crushing of between 40% and 60%.
